(19) Europäisches Patentamt
European Patent Office
Office européen des brevets

(11) EP 3 448 800 B1

(12) FASCICULE DE BREVET EUROPEEN

(45) Date de publication et mention
de la délivrance du brevet:
**01.01.2020 Bulletin 2020/01**

(51) Int Cl.:
***B67D 3/04*** *(2006.01)*     ***F16K 31/60*** *(2006.01)*
***F16K 3/02*** *(2006.01)*     ***F16K 3/04*** *(2006.01)*

(21) Numéro de dépôt: **17725651.8**

(22) Date de dépôt: **10.04.2017**

(86) Numéro de dépôt international:
**PCT/FR2017/000071**

(87) Numéro de publication internationale:
**WO 2017/187028 (02.11.2017 Gazette 2017/44)**

(54) **ROBINET DE DÉGUSTATION**

GETRÄNKEZAPFHAHN

BEVERAGE SPIGOT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.04.2016 FR 1653730**

(43) Date de publication de la demande:
**06.03.2019 Bulletin 2019/10**

(73) Titulaire: **D-Innovation**
**33750 Beychac-Et-Caillau (FR)**

(72) Inventeurs:
• **THURIN, Benjamin**
**33000 Bordeaux (FR)**

• **GUENERIE, Aurélien**
**33880 Saint Caprais de Bordeaux (FR)**

(74) Mandataire: **Fantin, Laurent**
**ALLICI**
**Gare de Bordeaux Saint-Jean**
**Pavillon Nord - Parvis Louis Armand**
**CS 21912**
**33082 Bordeaux Cedex (FR)**

(56) Documents cités:
**EP-A1- 0 962 421    US-A- 3 321 175**

**Description**

DOMAINE DE L'INVENTION

La présente invention appartient au domaine des robinets à usage industriel permettant le prélèvement d'échantillons de liquide ou de boue.

Plus particulièrement, la présente invention appartient au domaine des robinets de dégustation dans le domaine vinicole.

ETAT DE L'ART

Traditionnellement, les robinets mis en œuvre sur des containers de liquide comportent une chambre étanche remplie dudit liquide et un guide d'écoulement. Le passage de la chambre au guide d'écoulement est permis par un système tel qu'un système de valve par exemple.

Les dispositifs des brevets américains US 7 721 755, US 6 321 948, US 3 321 175 et US 8 640 931 présentent ce type de robinet. L'ouverture et la fermeture des robinets présentés se fait par la mise en rotation d'un mécanisme permettant la mise en relation de la chambre avec le guide d'écoulement.

La demande de brevet britannique GB 240575 décrit un robinet fonctionnant suivant un principe similaire, dans lequel au moins une partie du guide d'écoulement est amovible, afin de permettre l'installation du robinet sur un container au moyen d'un maillet, sans déformer ou casser le guide d'écoulement. Celui-ci est alors mis en œuvre après installation du robinet sur le container.

L'inconvénient de ces dispositifs est double.

Tout d'abord, la chambre étanche des robinets de dégustation est susceptible de se boucher si le liquide dont le container est rempli contient des corps solides. Ceci est particulièrement vrai dans le domaine vinicole : durant les périodes de vinification, de nombreux corps solides tels que par exemple peaux, pépins de raisin, branches, sont présents dans le liquide et peuvent obstruer la zone d'écoulement entre la chambre et le guide d'écoulement ;

Ensuite, des traces de liquide stagnent dans le guide d'écoulement entre deux prélèvements. Ce liquide en contact avec l'air est susceptible de fausser de futurs prélèvements d'échantillons, ce qui est particulièrement gênant lorsqu'il s'agit de la dégustation de vin par exemple.

Le document EP 0 962 421 décrit un système d'obturation fixé sur un container qui comprend un corps traversé de part en part par un trou de sortie d'un liquide contenu dans le container. Ce trou de sortie comprend un filetage permettant de visser un bouchon. Le système d'obturation comprend également un mécanisme de commande qui comporte un arbre monté pivotant dans un trou qui traverse le corps. Le mécanisme de commande comprend également une poignée reliée à une extrémité avant de l'arbre et un obturateur fixé à une extrémité arrière de l'arbre et de dimensions suffisantes pour pouvoir obstruer le trou de sortie.

Un robinet de dégustation pourrait être vissé dans le trou de sortie. Cependant, la mise en place par vissage d'un tel robinet n'est pas aisée et rend difficile le nettoyage.

Le document FR-2.491.191 décrit un dispositif pour soutirer un liquide contenu dans un container. Ce dispositif comprend un corps qui présente un trou traversant fermé par un bouchon et un conduit démontable qui est configuré pour s'insérer dans le trou traversant. Ce conduit démontable comporte une extrémité configurée pour se clipser sur le bouchon. Pour provoquer l'écoulement du liquide à l'extérieur du container, le conduit démontable est translaté afin que son extrémité sur laquelle est clipsé le bouchon pénètre dans le container.

Ce dispositif est relativement complexe et donc coûteux. Il ne permet pas la prise d'échantillon lorsque la pression dans le container dépasse une valeur au-delà de laquelle l'opérateur n'a pas la force nécessaire de pousser le conduit à l'intérieur du container. De plus, un disfonctionnement grave peut apparaitre, si le bouchon se décroche à l'intérieur du container, à cause d'une particule solide contenu dans le container par exemple.

EXPOSE DE L'INVENTION

Le dispositif suivant l'invention est une alternative aux robinets industriels déjà existants. Il permet notamment de faciliter le nettoyage de ses composants et d'éviter la rétention de liquide dans le guide d'écoulement. Les prélèvements ne sont donc pas faussés par du liquide issu de prélèvements antérieurs qui aurait été retenu dans le guide d'écoulement, en contact avec l'air.

A cet effet, l'invention a pour objet un robinet de dégustation fixé à un container d'un liquide qui comporte:

- un corps, par lequel ledit robinet est apte à être fixé audit container, traversé de part en part par un trou de conduit et un trou d'arbre présentant chacun un axe de révolution ;
- un mécanisme de commande qui comporte :

    o un arbre qui est monté pivotant dans le trou d'arbre du corps de manière à traverser le corps,
    o un obturateur mobile entre une position fermée lorsque l'obturateur obstrue totalement le trou de conduit du corps et une position ouverte lorsque ledit obturateur n'obstrue pas du tout ledit trou de conduit, l'obturateur étant relié à l'arbre de sorte à être plaqué contre une face arrière du corps,

    o une commande configurée pour faire pivoter l'arbre positionné au niveau d'une face avant du corps ;

- un conduit démontable de dimensions légèrement inférieures à celles du trou de conduit dudit corps, apte à être inséré dans ledit trou de conduit, et comportant une partie tubulaire, le trou de conduit ayant une réduction de diamètre pour former une butée contre laquelle prend appui le conduit ;
- un mécanisme de verrouillage/déverrouillage configuré pour occuper un état verrouillé dans lequel il immobilise le conduit dans le trou de conduit et un état déverrouillé dans lequel il autorise le démontage du conduit.

Une fois le dispositif selon l'invention fixé au container, un opérateur peut agir sur la commande du mécanisme de commande pour passer d'une position fermée à une position ouverte du dispositif, ou inversement. La rotation de l'obturateur solidaire de l'arbre entraîné en rotation par la commande permet ainsi de dégager le trou de conduit, obstrué en position fermée, ou au contraire de reboucher le trou de conduit, permettant ainsi l'écoulement du liquide dans le conduit, à des débits variables, allant d'une absence d'écoulement en position fermée à un débit maximal atteint en position ouverte.

Lors du processus de fermeture, l'obturateur chasse dans son mouvement de rotation les particules susceptibles de boucher le robinet. Si certains corps solides, par exemple peaux et pépins de raisins ou branches, sont engagés dans le trou de conduit, ils sont poussés ou cisaillés par l'obturateur dans la mesure où ils n'excèdent pas une résistance mécanique limite dépendant notamment de la forme et du matériau utilisés pour fabriquer l'obturateur.

Dans un mode de mise en œuvre, la nervure de l'obturateur met en mouvement le liquide pour chasser les corps solides de manière plus efficace qu'en absence de nervure. Dans ce mode de mise en œuvre, la diminution de l'épaisseur de l'obturateur permet également d'éviter l'accumulation de particules solides entre l'obturateur et une paroi éventuelle, par exemple dans le cas d'un manchon de longueur excessive.

Dans un mode de mise en œuvre, le mécanisme de commande est bloqué en rotation par une poche constituant un système de butée, limitant la course du mécanisme de commande, entre la position fermée et la position ouverte.

Le conduit guidant le liquide immédiatement après la zone d'étanchéité, la rétention dudit liquide à l'intérieur des divers éléments du dispositif, exception faite du conduit, est minimisée. Par ailleurs, l'absence d'obstacle dans le conduit joue en faveur d'un écoulement laminaire, ce qui permet de s'affranchir des inconvénients liés à un écoulement turbulent, par exemple éclaboussures ou aération du liquide.

Le dispositif comprend un système de verrouillage/déverrouillage du conduit. Ce dernier à l'avantage de permettre un montage, démontage particulièrement facile et rapide à mettre en œuvre. Le verrouillage étant obtenu par contacte rigide, ce dernier est très sûr.

En outre, il ne nécessite pas de filetage ou gorge rendant le nettoyage difficile. Après utilisation du robinet, le conduit peut être enlevé en réalisant la même opération que pour sa mise en œuvre, mais en sens inverse. Il peut alors être nettoyé, de sorte que la prise d'échantillon suivante ne soit pas faussée par la présence de traces du liquide ayant été au contact de l'air. Des éventuels corps solides peuvent également être évacués de cette manière. L'enlèvement du conduit permet également à l'opérateur d'accéder à l'ensemble des zones du corps pour un nettoyage optimal.

Dans un mode de mise en œuvre, le conduit est remplacé par un outil adapté de manière similaire au conduit, par exemple outillages de mesures ou de traitements.

L'invention est une alternative pratique et économique aux robinets de dégustation existant actuellement sur le marché.

Elle permet notamment de réduire la fréquence des opérations de nettoyage, par son système d'obturateur permettant de chasser les particules et de pousser ou cisailler les corps solides pouvant boucher le robinet. Son système de conduit amovible facilite par ailleurs ces opérations de nettoyage.

En outre, la fixation du dispositif à un container tel qu'une cuve à vin peut se faire par des moyens existant déjà sur le marché, par exemple des manchons lisses ou filetés.

BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.

La Figure 1 est une coupe verticale, de normale (Oy), d'une première forme de réalisation de l'invention mise en œuvre sur une cuve.

La Figure 2 est une vue isométrique plongeante de devant d'une seconde forme de réalisation de l'invention.

La Figure 3 est une vue isométrique plongeante de derrière de la forme de réalisation de la Figure 2 de l'invention.

La Figure 4a est une vue de derrière de la forme de réalisation de la Figure 1 en position fermée.

La Figure 4b est une vue de derrière de la forme de réalisation de la Figure 1 en position ouverte.

La Figure 5a est une section verticale, de normale (Ox), de la forme de réalisation de la Figure 2 de l'invention, en absence de conduit, en position fermée, le trait en pointillé représentant la projection de l'obturateur sur le plan de section.

La Figure 5b est une section verticale, de normale (Ox), de la forme de réalisation de la Figure 2 de l'invention, en absence de conduit, en position ouverte, le trait en pointillé représentant la projection de l'obturateur sur le plan de section.

La Figure 5c est une vue de face de l'obturateur faisant apparaître ses principales dimensions, le trait en pointillés représentant la projection sur le plan de section du contour du trou de conduit au niveau de la face arrière du corps lorsque l'obturateur est assemblé au reste du dispositif selon l'invention.

La Figure 6a est une vue isométrique plongeante de devant de la forme de réalisation de la Figure 2 illustrant une première étape de l'assemblage et du verrouillage du conduit sur le corps.

La Figure 6b est une vue isométrique plongeante de devant de la forme de réalisation de la Figure 2 illustrant une seconde étape de l'assemblage et du verrouillage du conduit sur le corps.

La Figure 6c est une vue isométrique plongeante de devant de la forme de réalisation de la Figure 2 illustrant une troisième étape de l'assemblage et du verrouillage du conduit sur le corps.

La Figure 7a est une vue isométrique de devant d'une troisième forme de réalisation de l'invention en position fermée, dans laquelle l'obturateur a la forme d'un parallélépipède rectangle.

La Figure 7b est une vue isométrique de derrière de la forme de réalisation de la Figure 7a en position fermée.

La Figure 7c est une vue isométrique de devant de la forme de réalisation de la Figure 7a en position ouverte.

La Figure 7d est une vue isométrique de derrière de la forme de réalisation de la Figure 7a en position ouverte.

La Figure 8 est une vue isométrique de côté de la forme de réalisation de la Figure 1 dans laquelle le dispositif suivant l'invention est destiné à être emmanché dans un manchon lisse.

La Figure 9 est une vue de face d'un robinet de dégustation selon un autre mode de réalisation,

La figure 10a est une coupe selon la ligne A-A du robinet de dégustation visible sur la figure 9 à l'état verrouillé, et

La figure 10b est une coupe selon la ligne A-A du robinet de dégustation visible sur la figure 9 à l'état déverrouillé.

## DESCRIPTION DETAILLEE

Dans la description, les termes « haut », « bas », « supérieur », « inférieur », « horizontal », « vertical », « avant », « arrière », doivent être compris dans le sens commun qui leur serait donné par un utilisateur du robinet devant utiliser ledit robinet c'est-à-dire une fois le dispositif assemblé **en position fermée** et fixé à un container tel qu'une cuve. La notion de position fermée est précisée par la suite.

Afin de clarifier ces notions par la suite, un repère orthonormé (Oxyz) est défini.

L'axe (Ox) présente une direction horizontale.

Son vecteur directeur est dirigé vers l'extérieur du container, perpendiculairement à la partie du container accueillant le dispositif.

L'axe (Oz) présente une direction verticale. Son vecteur directeur est orienté vers le haut.

Une face « avant », respectivement une face « arrière », doit être comprise comme étant une surface ayant sa normale orientée dans le sens des abscisses x croissantes, respectivement décroissantes.

Une partie « avant » d'un élément, respectivement une partie « arrière », doit être comprise comme étant une partie dont les points constitutifs ont des abscisses x supérieures, respectivement inférieures, à celles des points constitutifs d'une partie « arrière », respectivement « avant » du même élément.

Une partie « supérieure » d'un élément, respectivement une partie « inférieure », doit être comprise comme étant une partie dont les points constitutifs ont des cotes z supérieures, respectivement inférieures, à celles des points constitutifs d'une partie « inférieure », respectivement « supérieure » du même élément.

Un premier élément sera « en amont » d'un second élément si les points constitutifs dudit premier élément ont des abscisses globalement inférieures à celles des points constitutifs dudit second élément.

Dans la description, sauf mention contraire, le dispositif sera décrit en **position fermée.** La notion de position fermée est précisée par la suite.

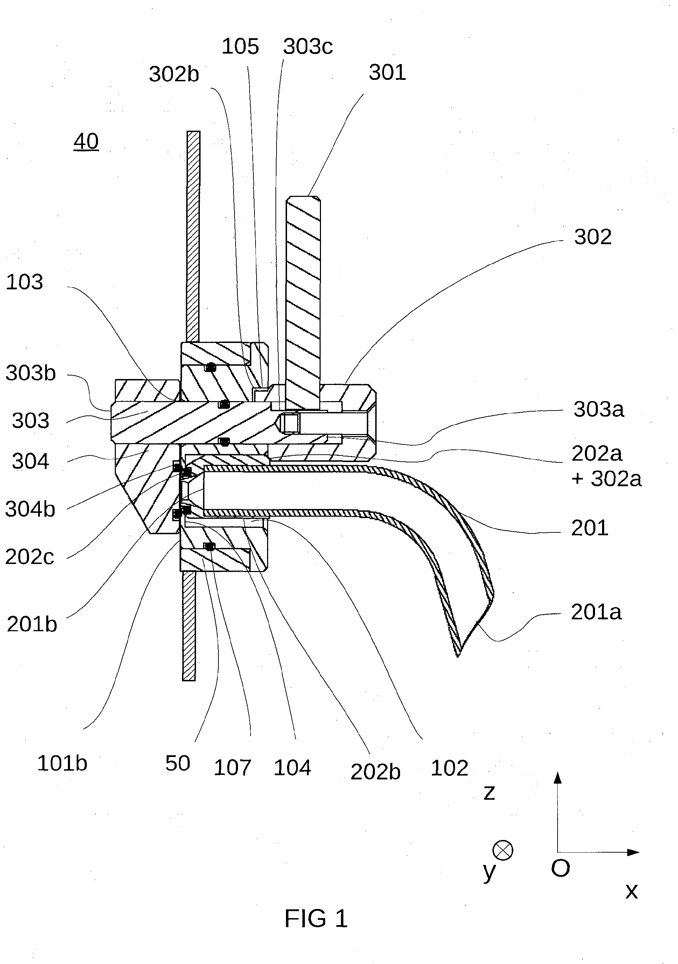

Le dispositif suivant l'invention, tel qu'illustré sur la Figure 1, comporte :

- un corps 10 ;
- un conduit 20 ;
- un mécanisme de commande 30.

Le corps 10 présente une face avant 101a et une face arrière 101b. Dans les exemples de réalisation des Figures 1 à 3, le corps 10 est constitué d'une partie avant et d'une partie arrière chacune sensiblement cylindrique, de section circulaire, d'axe longitudinal sensiblement confondu avec un axe longitudinal du corps 10 parallèle à l'axe (Ox). Le diamètre de la partie arrière est légèrement inférieur à celui de la partie avant.

Quel que soit le mode de réalisation, le corps 10 est configuré pour obturer de manière étanche un orifice ménagé dans une cuve, la face arrière 101b étant située à l'intérieur de la cuve et la face avant 101a à l'extérieur de la cuve lorsque le corps est mis en place sur la cuve.

Le corps 10 est traversé de part en part par un trou de conduit 102 sensiblement cylindrique et un trou d'arbre 103 présentant un axe de révolution. Dans les exemples de réalisation non limitatifs des Figures 1 à 3, le trou d'arbre 103 et de conduit sont cylindriques de section circulaire et chacun des axes de révolution des trous de conduit 102 et trou d'arbre 103 est sensiblement parallèle à l'axe (Ox). En proximité immédiate de la face arrière 101b du corps 10, le diamètre du trou de conduit 102 est légèrement réduit afin de former une butée 104, laquelle est située à une distance de butée $L_b$ de la face avant 101a dudit corps.

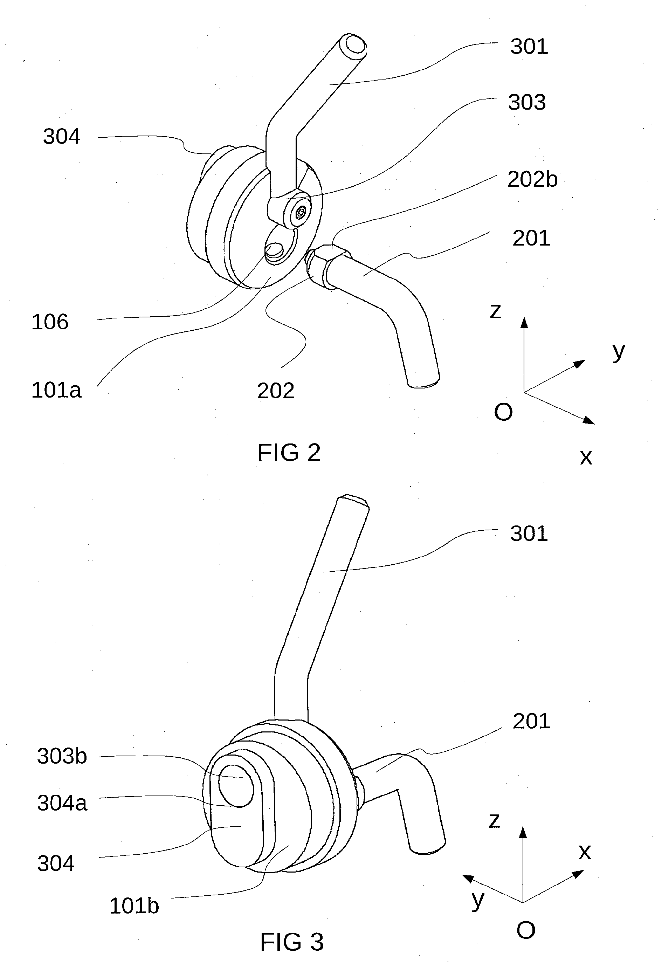

Dans une forme de réalisation illustrée sur la Figure 2, le trou de conduit 102 comprend également sur sa surface interne un bouton de verrouillage 106 saillant.

Dans une forme de réalisation non représentée ici, le trou de conduit 102 est conique.

Par la suite, on note $R_{102}$ et $R_{103}$ les rayons respectifs des trous de conduit 102 et trou d'arbre 103 au niveau de la face arrière 101b, et $e$ l'entraxe entre les axes desdits trous.

Le conduit 20 comporte une partie tubulaire 201 et un embout 202. Selon un mode de réalisation visible sur la figure 1, la partie tubulaire 201 et l'embout 202 sont deux pièces distinctes.

La partie tubulaire 201 présente, depuis une extrémité arrière 201b, une partie droite de longueur minimale $L_b$.

Avantageusement, la partie tubulaire 201 présente un bec 201a biseauté, lequel permet de limiter la rétention de liquide à l'intérieur du conduit 20 lors de la mise en œuvre du robinet.

Dans la forme de réalisation non limitative illustrée sur la Figure 1, la partie tubulaire 201 présente une partie droite puis un coude permettant, lors de la mise en œuvre de l'invention, de guider l'écoulement d'un liquide, par exemple du vin, d'un container vers un contenant, par exemple depuis une cuve vers un verre.

L'embout 202 a une forme globalement torique et est fixé à l'extrémité arrière 201b de la partie tubulaire 201. Le diamètre extérieur de l'embout 202 est légèrement inférieur à celui du trou de conduit 102 du corps 10, de sorte à permettre son insertion dans ledit trou de conduit. Par ailleurs, l'embout 202 présente sur une partie avant un chanfrein conduit 202a en bordure ainsi qu'un méplat conduit 202b.

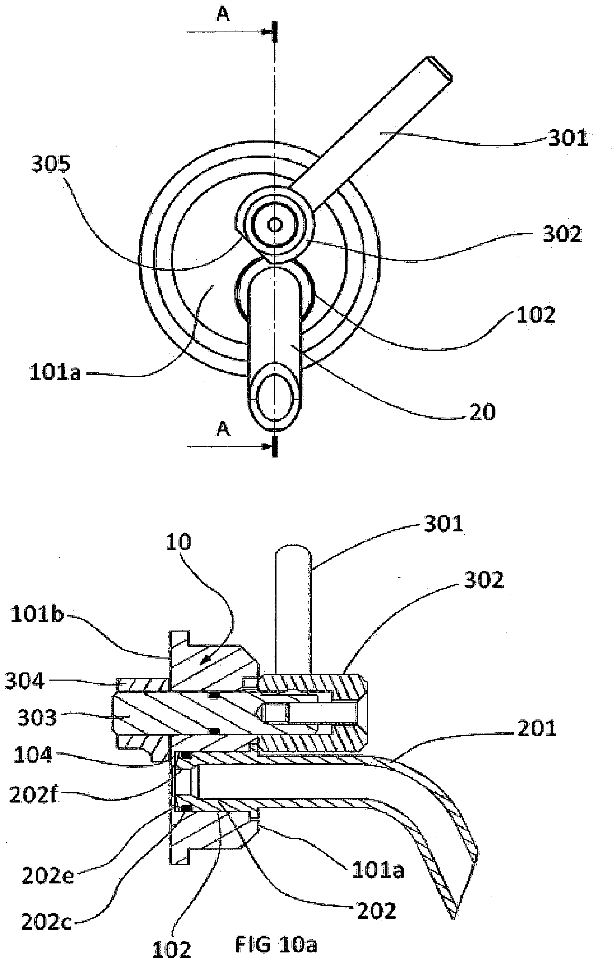

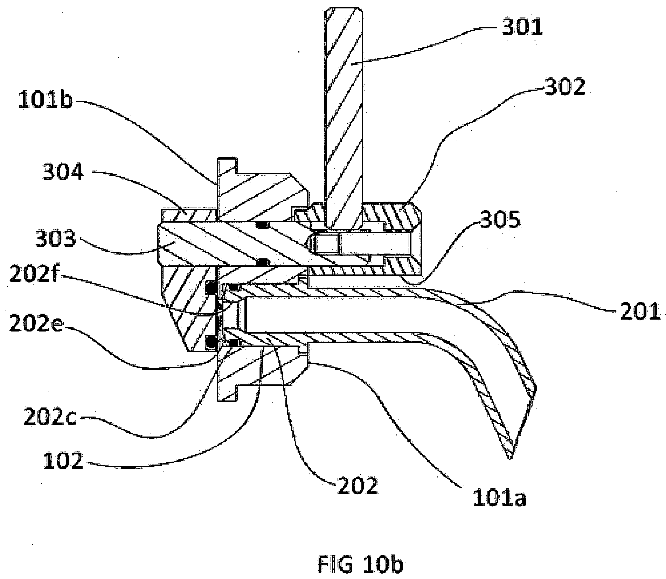

Comme illustré sur les figures 1, 10a et 10b, l'embout 202 comprend une face arrière 202e qui coopère avec la butée 104. Selon un mode de réalisation visible sur la figure 1, la face arrière 202e est plane et perpendiculaire à l'axe de l'embout 202. Selon un autre mode de réalisation sur les figures 10a et 10b, la face arrière 202e est légèrement conique.

Quel que soit le mode de réalisation, la face arrière 202e comprend un trou traversant 202f qui est configuré pour assurer la continuité entre la partie tubulaire 201 et le trou du conduit 102.

Un joint de bout de conduit 202c circulaire est mis en œuvre sur une partie arrière de l'embout 202. Selon un mode de réalisation visible sur la figure 1, le joint de bout de conduit 202c est positionné dans une gorge ménagée sur la face arrière 202e de l'embout 202 autour du trou traversant 202f.

Selon un autre mode de réalisation visible sur les figures 10a et 10b, le joint de bout de conduit 202c est positionné sur la partie cylindrique de l'embout 202, à proximité immédiate de la face arrière 202e.

Le fait de positionner le joint de bout de conduit 202c le plus proche possible de la portion du trou de conduit 102 présente au niveau de la butée 104 permet de réduire la quantité de liquide retenue dans le robinet après le retrait du conduit 20.

Dans la forme de réalisation non représentée ici dans laquelle le trou de conduit 102 est conique, l'embout 202 a également une forme conique.

Dans une forme de réalisation visible sur les figures 10a et 10b, la partie tubulaire 201 et l'embout 202 ne forment qu'une seule pièce. L'embout 202 constitue alors un épaulement du conduit 20.

Dans la forme de réalisation de la Figure 1, le mécanisme de commande 30 comprend :

- un levier 301 ;
- un capuchon 302 ;
- un arbre 303 ;
- un obturateur 304.

L'arbre 303 est sensiblement cylindrique et de section circulaire, de dimensions légèrement inférieures à celles du trou d'arbre 103 du corps 10 afin de pouvoir être inséré dans ledit trou d'arbre. L'arbre 303 présente sur une extrémité avant 303a un méplat arbre 303c dont le vecteur normal est orienté vers le haut.

Le levier 301, comme illustré sur la Figure 1, est une pièce rigide comportant au moins une partie cylindrique dont une extrémité plane peut être plaquée sur le méplat arbre 303c de l'arbre 303. Le levier 301 est fretté au capuchon 302, lequel est fixé à l'extrémité avant 303a de l'arbre 303 et présente sur une partie arrière un chanfrein capuchon 302a en bordure ainsi qu'un tenon 302b saillant sur une partie supérieure de sa face arrière.

L'obturateur 304 est une pièce rigide allongée présentant une longueur $L_g$ strictement supérieure à une longueur minimale $L_0$ et une largeur $l_g$ strictement supérieure à une largeur minimale $l_0$, avec :

$$L_0 = R_{102} + R_{103} + e$$

$$l_0 = 2*\text{Max}(R_{102} \; ; R_{103})$$

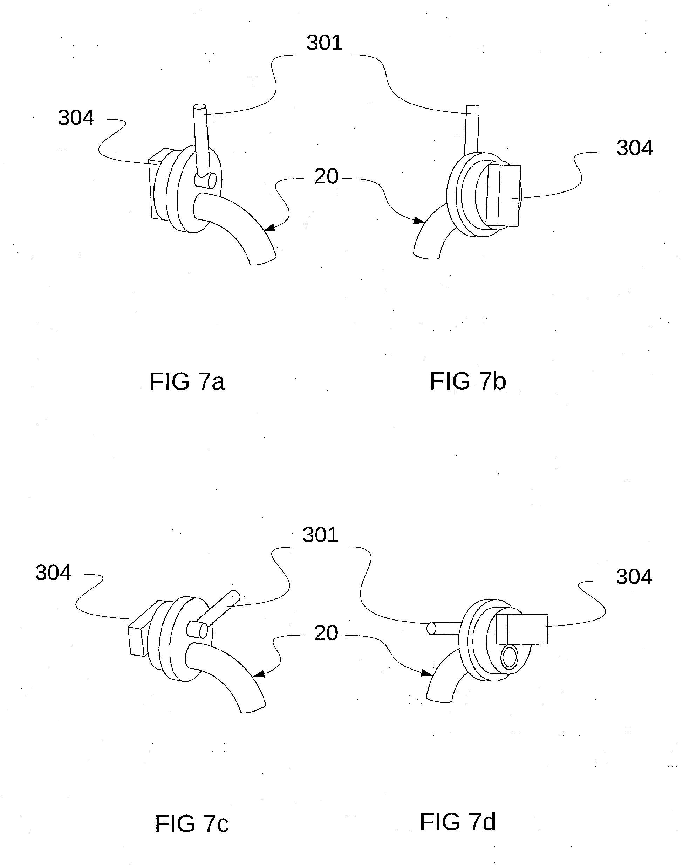

Dans l'exemple de réalisation du mode de la Figure 1, l'obturateur 304 est une pièce rigide de contour globalement oblong ; dans l'exemple de réalisation du mode des Figures 7a à 7d, ledit obturateur a une forme de parallélépipède rectangle.

Par ailleurs, l'obturateur 304 présente un trou excentré 304a circulaire de diamètre sensiblement identique au diamètre de l'arbre 303 de sorte que ledit obturateur est fixé par frettage à une extrémité arrière 303b dudit arbre. D'autres procédés de fixation tels que par exemple vissage, soudage et fixation par goupille sont également envisageables. L'obturateur 304 présente également un joint obturateur 304b circulaire, de diamètre légèrement supérieur au diamètre du trou conduit 102 au niveau de la face arrière 101b du corps 10.

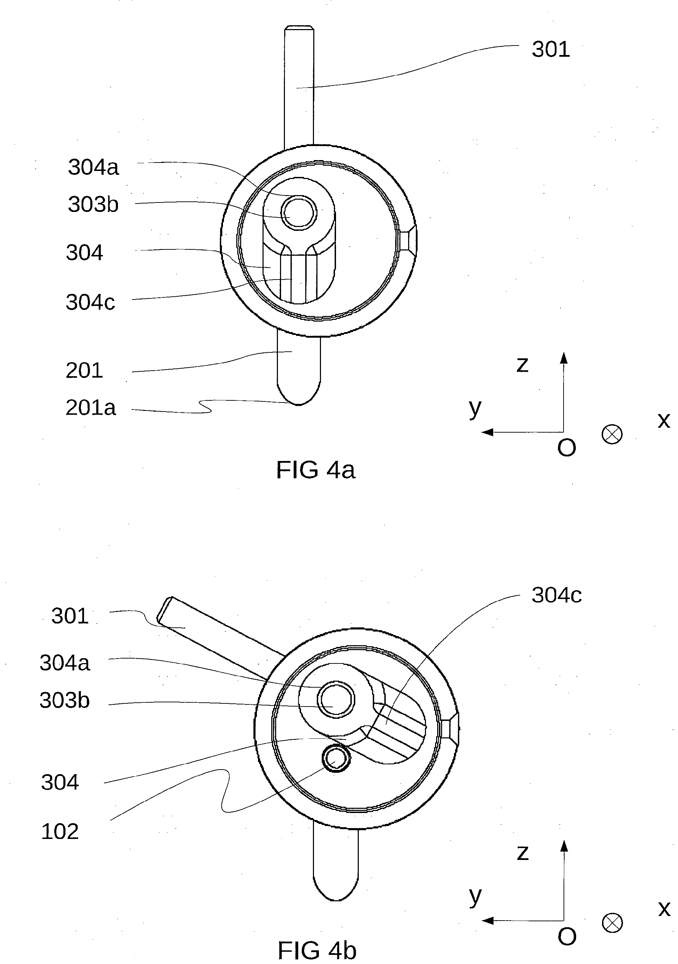

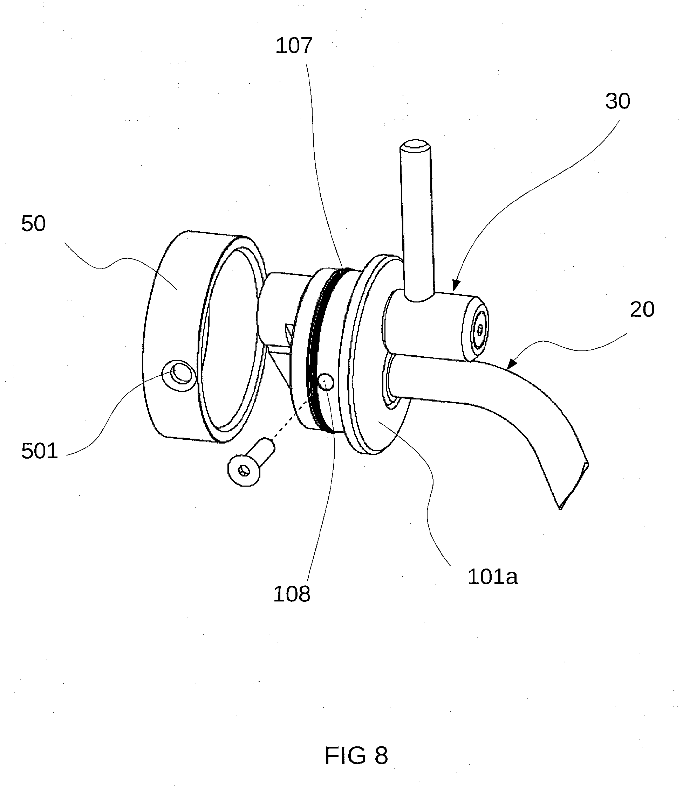

Dans l'exemple de réalisation du mode de la Figure 1, repris sur les Figures 4a, 4b et 8, l'obturateur 304 présente également une nervure 304c.

Lors de la mise en œuvre du dispositif, l'arbre 303, l'obturateur 304, le corps 10 et le conduit 20 sont amenés à être en contact avec un liquide.

Avantageusement, l'ensemble du dispositif est constitué d'un matériau inoxydable, par exemple de l'acier inoxydable ou un matériau polymère pour limiter les phénomènes chimiques gênants tels que la corrosion.

Lorsque le mécanisme de commande 30 et le corps 10 sont assemblés entre eux par le biais de l'arbre 303 et du trou d'arbre 103, l'ensemble du mécanisme de commande 30 est susceptible d'être mis en mouvement de rotation autour de l'axe dudit arbre. La translation du mécanisme de commande 30 vis-à-vis du corps 10 est empêchée par l'obturateur 304 d'une part, qui vient en contact avec la face arrière 101b du corps 10, et par le capuchon 302 d'autre part, qui vient en contact avec la face avant 101a dudit corps.

Dans le dispositif suivant l'invention, la longueur de l'obturateur 304 est suffisante pour que, une fois que le mécanisme de commande 30 assemblé avec le corps 10, ledit obturateur puisse obstruer entièrement le trou de conduit 102.

Pour cela, le trou excentré 304a est positionné de telle manière que la condition suivante est vérifiée :

$$R_{103} \leq d \leq L_g - L_0 + R_{103}$$

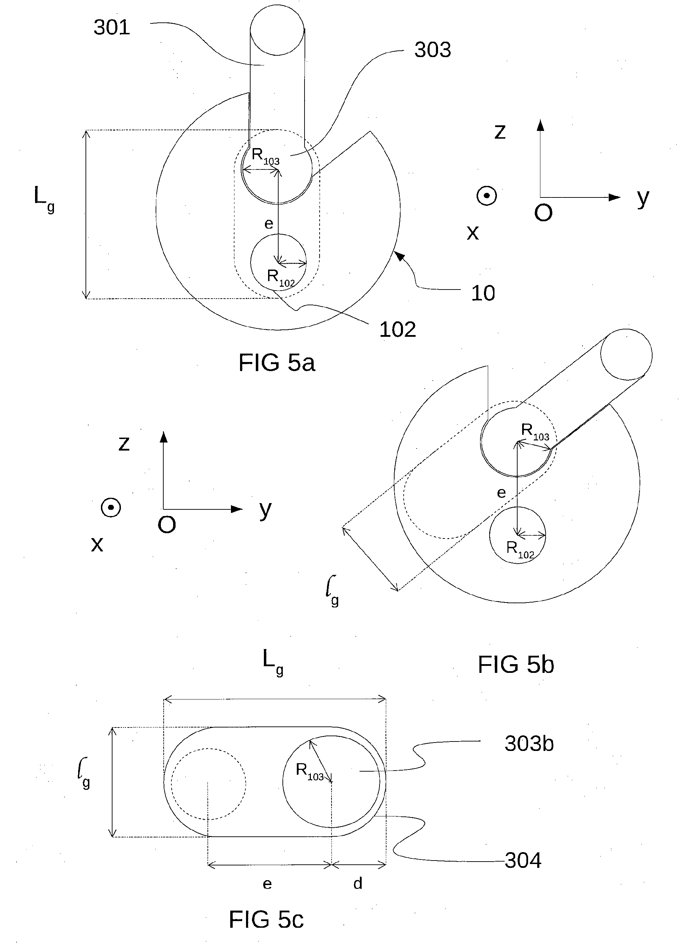

Où **d** est la distance entre le centre du trou excentré 304a circulaire et l'extrémité distale de l'obturateur 304 la plus proche dudit centre, comme illustré sur la Figure 5c.

Par la suite, le dispositif selon l'invention sera dit en :

- **position fermée** lorsque l'obturateur 304 obstrue totalement le trou de conduit 102 du corps 10 ;
- **position intermédiaire** lorsque ledit obturateur obstrue partiellement ledit trou de conduit ;
- **position ouverte** lorsque ledit obturateur n'obstrue pas du tout ledit trou de conduit.

Dans l'exemple de réalisation illustré sur la Figure 1, le tenon 302b peut être introduit dans une poche 105 du corps 10, ladite poche étant une partie évidée dudit corps. La forme de la poche 105 dépend de la forme du tenon 302b, et correspond à l'empreinte laissée par ledit tenon dans le corps 10 lorsque le mécanisme de commande 30 est inséré dans le trou d'arbre 103 dudit corps puis entraîné en rotation depuis une position fermée vers une position ouverte du dispositif selon l'invention, comme définies précédemment. Le corps 10 devient alors en lui-même une butée pour le tenon 302b, limitant ainsi le mouvement de rotation du mécanisme de commande 30.

Dans l'exemple de réalisation des Figures 2 et 3, c'est le levier 301 qui remplit la fonction technique du tenon 302b. Une fois le mécanisme de commande 30 assemblé avec le corps 10, le levier 301 se retrouve légèrement en amont de la face avant 101a du corps 10. La poche 105 correspond alors à l'empreinte laissée par le levier 301 dans le corps 10 lorsque le mécanisme de commande 30 est entraîné en rotation depuis une position fermée vers une position ouverte du dispositif selon l'invention, comme vu précédemment.

Quel que soit le mode de réalisation, le mécanisme de commande 30 comprend :

- un arbre 303 qui est monté pivotant dans le trou d'arbre 103 du corps 10 de manière à traverser le corps 10,
- un obturateur 304 mobile entre une position fermée lorsque l'obturateur 304 obstrue totalement le trou de conduit 102 du corps 10 et une position ouverte lorsque ledit obturateur n'obstrue pas du tout ledit trou de conduit 102, l'obturateur 304 étant relié à l'arbre 303 de sorte à être plaqué contre la face arrière 101b du corps 10,
- une commande configurée pour faire pivoter l'arbre 303 positionné au niveau de la face avant 101a du corps 10.

Dans la forme de réalisation de la Figure 1, le trou de conduit 102 et le trou d'arbre 103 sont situés suffisamment proches l'un de l'autre pour que le capuchon 302 déborde légèrement sur ledit trou de conduit. L'assemblage du conduit 20 sur le corps 10 se fait alors en orientant le méplat conduit 202b vers le haut, afin de pouvoir insérer ledit conduit dans le trou de conduit 102. Une rotation du conduit 20 permet ensuite de verrouiller ledit conduit en mettant en contact le chanfrein conduit 202a et le chanfrein capuchon 302a. Lors de cette rotation, le contact entre le chanfrein conduit 202a et le chanfrein capuchon 302a permet la compression du joint de bout de conduit 202c, lequel assure l'étanchéité entre le conduit 20 et le corps 10.

Dans la forme de réalisation non représentée dans laquelle le trou de conduit 102 et l'embout 202 sont coniques, un joint placé sur la périphérie de l'embout permet d'assurer l'étanchéité entre le corps 10 et le conduit 20.

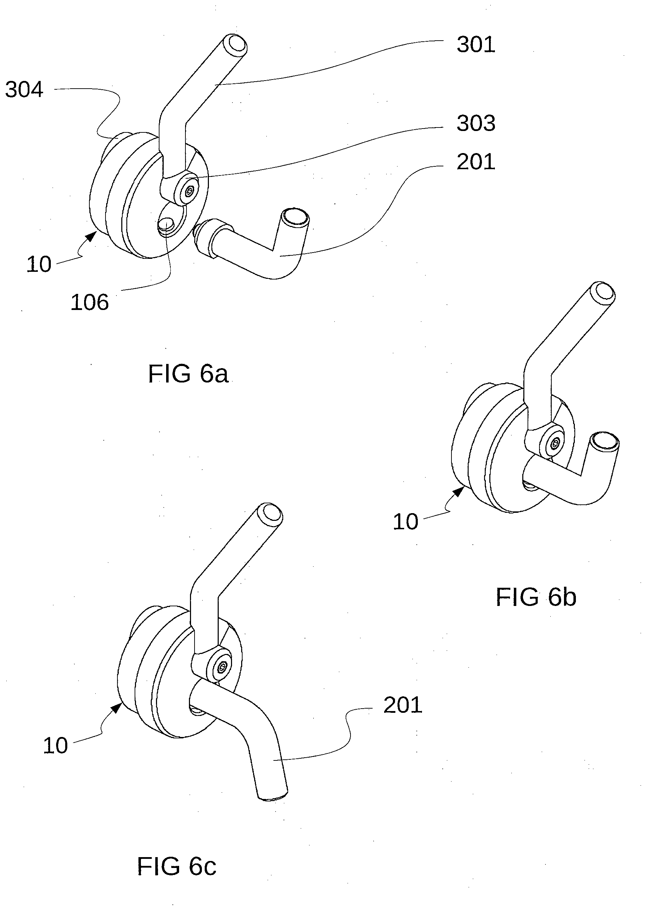

Dans la forme de réalisation des Figures 2 et 3, les étapes d'assemblage du conduit 20 sur le corps 10 sont illustrées sur les Figures 6a, 6b et 6c.

Dans un premier temps, le conduit 20 est orienté de sorte que le méplat conduit 202b soit orienté vers le bas, comme illustré sur la Figure 6a. Dans cette configuration, le conduit 20 peut être inséré dans le trou de conduit 102, jusqu'à la butée 104 sans que le bouton de verrouillage 106 ne constitue d'obstacle. Le dispositif est alors dans la configuration de la Figure 6b. Le conduit 20 est ensuite tourné autour de l'axe du trou de conduit 102, de sorte que le méplat conduit 202b est orienté vers le haut. Le conduit 20 est alors bloqué par le bouton de verrouillage 106 qui empêche ledit conduit d'être retiré du trou de conduit 102.

Selon un autre mode de réalisation visible sur les figures 9, 10a et 10b, le mécanisme de commande 30 comprend une portion cylindrique (le capuchon 302) qui déborde légèrement sur le trou de conduit 102. Cette portion cylindrique comprend un méplat commande 305 qui est configuré pour permettre l'introduction du conduit 20 dans le trou de conduit 102.

Quel que soit le mode de réalisation, le robinet de dégustation comprend un mécanisme de verrouillage/déverrouillage configuré pour occuper un état verrouillé dans lequel il immobilise le conduit 20 dans le trou de conduit 102 et un état déverrouillé dans lequel il autorise le démontage du conduit 20.

Selon une variante, le mécanisme de verrouillage/déverrouillage comprend une pièce de verrouillage mobile en rotation contre la face avant 101a du corps autour d'un axe de pivotement perpendiculaire à la face avant 101a entre une position déverrouillée dans laquelle la pièce de verrouillage n'interfère pas avec le trou de conduit 102 et une position verrouillée dans laquelle la pièce de verrouillage interfère avec le trou de conduit 102 afin d'immobiliser le conduit 20 dans le trou du conduit 102.

Selon un mode de réalisation, la pièce de verrouillage est indépendante du mécanisme de commande 30.

Selon un autre mode de réalisation, la pièce de verrouillage est une portion cylindrique, notamment le capuchon 302 du mécanisme de commande 30.

Selon une autre variante, le mécanisme de verrouillage/déverrouillage comprend une pièce de verrouillage fixe positionnée sur la face avant 101a du corps 10 et qui interfère avec le trou de conduit 102 afin d'immobiliser le conduit 20 dans le trou du conduit 102. En complément, le conduit 102 comprend un méplat conduit 202b, le méplat conduit 202b et la pièce de verrouillage fixe étant dimensionné de sorte que lorsque le méplat de conduit 202b est disposé en face de la pièce de verrouillage, le conduit 20 n'est plus maintenu dans le trou de conduit 102 et lorsque le méplat de conduit 202b est décalé par rapport à la pièce de verrouillage, le conduit 20 est maintenu dans le trou de conduit 102.

Selon un mode de réalisation, la pièce de verrouillage est indépendante du mécanisme de commande 30.

Selon un autre mode de réalisation, la pièce de verrouillage est une portion cylindrique, notamment le capuchon 302 du mécanisme de commande 30.

Dans un mode de mise en œuvre illustré sur la Figure 1, une fois le dispositif suivant l'invention assemblé, il peut être fixé en position fermée à un container 40 contenant un liquide, par exemple une cuve à vin.

Le dispositif peut par exemple être vissé dans un manchon fileté ou passe cloison fixé à la cuve. Il peut également être soudé à la cuve.

Il peut également être emmanché dans un manchon lisse 50, comme illustré sur les Figures 1 et 8. Dans cette forme de mise en œuvre, le manchon lisse 50 accueille la partie arrière du corps 10 et vient en butée contre la partie avant dont le diamètre est légèrement supérieur, comme vu plus haut. Dans ce cas l'étanchéité entre l'intérieur de la cuve et l'extérieur est assurée par un joint torique 107. L'orientation angulaire du robinet ainsi que son maintien en position sont alors assurés par vissage d'au moins une vis à travers un trou 501 du manchon lisse et un emplacement vis 108 situé en périphérie du corps 10, ou par un système de goupilles.

Dans le mode de mise en œuvre de la Figure 1, une fois fixé au container 40, seuls l'obturateur 304, l'extrémité arrière 303b de l'arbre 303 et la face arrière 101b du corps 10 sont en contact avec le liquide. Le dispositif étant en position fermée, dans l'exemple illustré, l'obturateur 304 et le levier 301 sont disposés verticalement, et ledit obturateur obstrue entièrement le trou de conduit 102 dans lequel le conduit 20 a été inséré puis verrouillé. La vis fixant le capuchon 302 à l'arbre 303 exerce une traction sur ledit arbre, comprimant ainsi le joint obturateur 304b contre la face arrière 101b du corps 10, sur la périphérie du trou de conduit 102, assurant ainsi l'étanchéité entre le dispositif et l'intérieur du container 40. En particulier, il est possible de compenser l'usure du joint obturateur 304b en resserrant la vis, occasionnant une compression plus importante dudit joint obturateur.

Le mécanisme de commande 30 est ensuite entraîné en rotation suivant un sens d'ouverture par un opérateur agissant sur la poignée. Selon le principe de bras de levier, plus le levier 301 est grand, plus la rotation est facilitée.

La rotation est permise par la liaison pivot existant entre le mécanisme de commande 30 et le corps 10, ainsi que par la poche 105 permettant le déplacement du tenon 302b, ou, le cas échéant, du levier 301. La rotation du mécanisme de commande 30 entraîne la rotation de l'obturateur 304 qui lui est solidaire, dégageant le trou de conduit 102 dans lequel est inséré le conduit 20. L'ouverture ainsi dégagée permet l'écoulement du liquide du container 40 à travers le conduit 20, ledit conduit guidant le liquide jusqu'à l'orifice de sortie au-delà duquel le liquide est récupéré dans un récipient, par exemple un verre.

Le débit du liquide peut être ajusté en tournant plus ou moins le mécanisme de commande 30, entraînant un dégagement plus ou moins important du trou de conduit 102. Le dispositif est alors susceptible d'évoluer d'une position fermée, correspondant à une absence d'écoulement de liquide, vers une position ouverte correspondant à un débit maximal, en passant par des positions intermédiaires correspondant à des débits plus ou moins importants suivant l'ouverture dégagée. Le débit maximal est atteint lorsque le tenon 302b, ou, le cas échéant, le levier 301, vient en butée contre le corps 10 lorsque le dispositif évolue d'une position fermée vers une position ouverte.

Le conduit 20 guidant le liquide immédiatement après la zone d'étanchéité, la rétention dudit liquide à l'intérieur des divers éléments du dispositif, exception faite dudit conduit, est minimisée. Par ailleurs, l'absence d'obstacle dans le conduit 20 joue en faveur d'un écoulement laminaire, ce qui permet de s'affranchir des inconvénients liés à un écoulement turbulent, par exemple éclaboussures ou aération du liquide.

Avantageusement, afin de faciliter l'écoulement du liquide et de limiter sa rétention dans le trou de conduit 102, ledit trou de conduit est légèrement incliné par rapport au corps 10, vers le bas dans le sens de l'écoulement dudit liquide.

Lorsqu'un échantillon souhaité de liquide a été prélevé, l'opérateur tourne la poignée dans un sens de fermeture, contraire au sens d'ouverture, pour ramener, suivant un processus similaire au processus d'ouverture, l'obturateur 304 en position initiale, obstruant ainsi la totalité du trou de conduit 102 et stoppant ainsi l'écoulement du liquide.

Lors du processus de fermeture, l'obturateur 304 chasse dans son mouvement de rotation les particules susceptibles de boucher le robinet. Si certains corps solides, par exemple peaux et pépins de raisins ou branches, sont engagés dans le trou de conduit 102, ils sont poussés ou cisaillés par l'obturateur 304 dans la mesure où ils n'excèdent pas une résistance mécanique limite dépendant notamment de la forme et du matériau utilisés pour fabriquer ledit obturateur.

Dans un mode de mise en œuvre correspondant à la forme de réalisation de la Figure 1, l'obturateur 304 comporte une nervure 304c qui, lorsque ledit obturateur est déplacé en ouverture ou en fermeture, met en mouvement le liquide pour chasser les corps solides de manière plus efficace qu'en absence de nervure. Dans ce mode de mise en œuvre, la diminution de l'épaisseur de l'obturateur permet également d'éviter l'accumulation de particules solides entre l'obturateur et une paroi éventuelle, par exemple dans le cas d'un manchon de longueur excessive.

Après utilisation du robinet, le conduit 20 peut être enlevé en réalisant la même opération que pour sa mise en œuvre, mais en sens inverse.

Une fois enlevé, le conduit 20 peut être nettoyé, de sorte que la prise d'échantillon suivante ne soit pas faussée par la présence de traces du liquide ayant été au contact de l'air. Des éventuels corps solides peuvent également être évacués de cette manière. L'enlèvement du conduit 20 permet également à l'opérateur d'accéder à l'ensemble des zones du corps 10 pour un nettoyage optimal.

De par sa conception, le dispositif selon l'invention est adapté à d'autres outils que le conduit 20, par exemple outillages de mesures ou de traitements dans la mesure où ils peuvent s'adapter de manière similaire au conduit 20 sur le dispositif.

**Revendications**

1. Robinet de dégustation apte à être fixé à un container (40) d'un liquide qui comprend:

   - un corps (10), par lequel ledit robinet est fixé audit container, traversé de part en part par un trou de conduit (102) et un trou d'arbre (103) présentant chacun un axe de révolution ;
   - un mécanisme de commande (30) qui comporte :

     ∘ un arbre (303) qui est monté pivotant dans le trou d'arbre (103) du corps (10) de manière à traverser le corps (10),
     ∘ un obturateur (304) mobile entre une position fermée lorsque l'obturateur (304) obstrue totalement le trou de conduit (102) du corps (10) et une position ouverte lorsque ledit obturateur n'obstrue pas du tout ledit trou de conduit (102), l'obturateur (304) étant relié à l'arbre (303) de sorte à être plaqué contre une face arrière (101b) du corps (10),
     ∘ une commande configurée pour faire pivoter l'arbre (303) positionné au niveau d'une face avant (101a) du corps (10) ;

   - un conduit (20) démontable de dimensions légèrement inférieures à celles du trou de conduit (102) dudit corps, apte à être inséré dans ledit trou de conduit, et comportant une partie tubulaire (201), **caractérisé en ce que**

   le trou de conduit (102) a une réduction de diamètre pour former une butée (104) contre laquelle prend appui le conduit (20) ; et **en ce que** le robinet de dégustation comprend un mécanisme de verrouillage/déverrouillage configuré pour occuper un état verrouillé dans lequel il immobilise le conduit (20) dans le trou de conduit (102) et un état déverrouillé dans lequel il autorise le démontage du conduit (20).

2. Robinet de dégustation selon la revendication 1 **caractérisé en ce que** le mécanisme de verrouillage/déverrouillage comprend une pièce de verrouillage mobile en rotation contre la face avant (101a) du corps (10) autour d'un axe de pivotement perpendiculaire à la face avant (101a) entre une position déverrouillée dans laquelle la pièce de verrouillage n'interfère pas avec le trou de conduit (102) et une position verrouillée dans laquelle la pièce de verrouillage interfère avec le trou de conduit (102) afin d'immobiliser le conduit (20) dans le trou du conduit (102).

3. Robinet de dégustation selon la revendication 1, **caractérisé en ce que** le mécanisme de verrouillage/déverrouillage comprend une pièce de verrouillage fixe positionnée sur la face avant (101a) du corps (10) et qui interfère avec le trou de conduit (102) et un méplat conduit (202b) prévu sur le conduit (20), le méplat conduit (202b) et la pièce de verrouillage fixe étant dimensionné de sorte que lorsque le méplat de conduit (202b) est disposé en face de la pièce de verrouillage, le conduit (20) n'est pas maintenu dans le trou de conduit (102) et lorsque le méplat de conduit (202b) est décalé par rapport à la pièce de verrouillage, le conduit (20) est maintenu dans le trou de conduit (102).

4. Robinet de dégustation selon la revendication 2 ou 3, **caractérisé en ce que** la pièce de verrouillage est une portion cylindrique (302) du mécanisme de commande (30).

5. Robinet de dégustation selon la revendication 4, **caractérisé en ce que** la portion cylindrique (302) du mécanisme de commande comprend un chanfrein (302a) configuré pour coopérer avec un chanfrein conduit (202a) prévu au niveau du conduit (20).

6. Robinet de dégustation selon l'une des revendications précédentes, **caractérisé en ce que** le conduit (20) présente sur une extrémité arrière (201b) un embout (202) et un joint de bout de conduit (202c) positionné à proximité d'une portion du trou de conduit (102) présente au niveau de la butée (104), configuré pour assurer l'étanchéité entre le conduit (20) et le corps (10).

7. Robinet de dégustation selon la revendication 6, **caractérisé en ce que** l'embout (202) comprend une face arrière (202e) configurée pour coopérer avec la butée (104) et qui comprend une gorge pour loger le joint de bout de conduit (20).

8. Robinet de dégustation selon la revendication 6, **caractérisé en ce que** l'embout (202) comprend une face arrière (202e) configurée pour coopérer avec la butée (104) et **en ce que** le joint de bout de conduit (20) est positionné sur une partie cylindrique de l'embout (202), à proximité immédiate de la face arrière (202e)

9. Robinet de dégustation selon l'une des revendications précédentes **caractérisé en ce que** :

    - le trou d'arbre (103) est sensiblement cylindrique de section circulaire ;

    - un capuchon (302), formant une liaison glissière avec l'arbre (303) est vissé à une extrémité avant (303a) dudit arbre suivant un axe sensiblement parallèle à l'axe de révolution du trou d'arbre (103) cylindrique de section circulaire.

10. Robinet de dégustation selon la revendication 9, **caractérisé en ce que** le mécanisme de commande (30) comporte un levier (301) fixé au capuchon (302) ou à l'arbre (303) pour faciliter la mise en rotation dudit mécanisme de commande.

11. Robinet de dégustation selon l'une des revendications précédentes **caractérisé en ce que** le conduit (20) comprend une partie tubulaire (201) et un embout (202) ne formant qu'une seule et même pièce, ledit embout constituant un épaulement du conduit (20).

12. Robinet de dégustation selon l'une des revendications précédentes **caractérisé en ce que** le conduit (20) comporte une partie droite prolongée par un coude.

13. Robinet de dégustation selon la revendication 1 **caractérisé en ce que** :

    - le trou de conduit (102) et une extrémité arrière (201b) de la partie tubulaire (201) du conduit (20) sont sensiblement coniques ;
    - ladite extrémité arrière présente un joint sur sa périphérie pour assurer l'étanchéité entre le corps (10) et le conduit (20).

14. Robinet de dégustation selon l'une des revendications précédentes, **caractérisé en ce que** le corps (10) comprend une partie évidée constituant une poche (105) accueillant une partie du mécanisme de commande (30) et formant un guide et une butée pour la rotation dudit mécanisme de commande.

15. Robinet de dégustation selon la revendication 14 combinée à la revendication 10, **caractérisé en ce que** la partie du mécanisme de commande (30) accueillie dans la poche (105) est le levier (301).

16. Robinet de dégustation selon la revendication 14 combinée à la revendication 9, **caractérisé en ce que** le capuchon (302) présente un tenon (302b) sur sa face arrière, lequel tenon constitue la partie du mécanisme de commande (30) accueillie dans la poche (105).

17. Robinet de dégustation selon l'une quelconque des revendications précédentes **caractérisé en ce que** l'obturateur (304) possède un joint obturateur (304b) maintenu en compression contre une face arrière (101b) du corps (10) et assurant l'étanchéité entre l'intérieur du container (40) et le corps (10).

18. Robinet de dégustation selon l'une quelconque des revendications **caractérisé en ce que** l'obturateur (304) présente une nervure (304c).

**Patentansprüche**

1. Getränkezapfhahn, der dazu geeignet ist, an einem Behälter (40) für Flüssigkeiten angebracht zu sein, mit:

- einem Körper (10), durch den der Zapfhahn an dem Behälter befestigt ist und durch den hindurch ein Leitungsloch (102) und ein Wellenloch (103) verlaufen, die jeweils eine Drehachse aufweisen;
- einem Steuermechanismus (30), mit:

- einer Welle (303), die schwenkbar in dem Wellenloch (103) des Körpers (10) angebracht ist und durch den Körper (10) hindurch verläuft,
- einem Verschluss (304), der zwischen einer geschlossenen Position, in der der Verschluss (304) das Leitungsloch (102) des Körpers (10) vollständig blockiert, und einer offenen Position, in der der Verschluss das Leitungsloch (102) überhaupt nicht blockiert, bewegbar ist, wobei der Verschluss (304) mit der Welle (303) verbunden ist, um gegen eine Rückseite (101b) des Körpers (10) gedrückt zu werden;
- einer Steuerung, die dazu eingerichtet ist, um die Welle (303) zu drehen, die an einer Vorderseite (101a) des Körpers (10) angeordnet ist;

- einer abnehmbaren Leitung (20), die Abmessungen aufweist, die geringfügig kleiner sind als diejenigen des Leitungslochs (102) des Körpers, die dazu geeignet ist, in das Leitungsloch eingeführt zu werden, und die einen rohrförmigen Abschnitt (201) aufweist, **dadurch gekennzeichnet, dass**

das Leitungsloch (102) einen verringerten Durchmesser hat, um einen Anschlag (104) zu bilden, an dem die Leitung (20) anliegt; und dass der Zapfhahn einen Verriegelungs-/Entriegelungsmechanismus aufweist, der dazu eingerichtet ist, einen verriegelten Zustand einzunehmen, in dem er die Leitung (20) im Leitungsloch (102) fixiert, und einen entriegelten Zustand einzunehmen, in dem er die Demontage der Leitung (20) ermöglicht.

2. Getränkezapfhahn nach Anspruch 1, **dadurch gekennzeichnet, dass** der Verriegelungs-/Entriegelungsmechanismus ein Verriegelungsstück umfasst, das gegen die Vorderseite (101a) des Körpers (10) um eine Schwenkachse senkrecht zur Vorderseite (101a) zwischen einer entriegelten Position, in der das Verriegelungsstück nicht in das Leitungsloch (102) eingreift, und einer verriegelten Position, in der das Verriegelungsstück in das Leitungsloch (102) eingreift, um die Leitung (20) in dem Leitungsloch (102) zu blockieren, drehbar ist.

3. Getränkezapfhahn nach Anspruch 1, **dadurch gekennzeichnet, dass** der Verriegelungs-/Entriegelungsmechanismus ein feststehendes Verriegelungsstück umfasst, das an der Vorderseite (101a) des Körpers (10) angeordnet ist und in das Leitungsloch (102) und eine an der Leitung (20) vorgesehene Leitungsabflachung (202b) eingreift, wobei die Leitungsabflachung (202b) und das feststehende Verriegelungsstück so bemessen sind, dass die Leitung, wenn die Leitungsabflachung (202b) gegenüber dem Verriegelungsstück angeordnet ist, nicht in dem Leitungsloch (102) gehalten wird, und die Leitung (20), wenn die Leitungsabflachung (202b) gegenüber dem Verriegelungsstück versetzt ist, in dem Leitungsloch (102) gehalten wird.

4. Getränkezapfhahn nach Anspruch 2 oder 3, **dadurch gekennzeichnet, dass** das Verriegelungsstück ein zylindrischer Abschnitt (302) des Steuermechanismus (30) ist.

5. Getränkezapfhahn nach Anspruch 4, **dadurch gekennzeichnet, dass** der zylindrische Abschnitt (302) des Steuermechanismus eine Abschrägung (302a) umfasst, die dazu eingerichtet ist, mit einer an der Leitung (20) vorgesehenen Leitungsabschrägung (202a) zusammenzuwirken.

6. Getränkezapfhahn nach einem der vorhergehenden Ansprüche, **dadurch gekennzeichnet, dass** die Leitung (20) an einem hinteren Ende (201b) ein Ansatzstück (202) und eine Rohrenddichtung (202c) aufweist, die in der Nähe eines Abschnitts des Leitungslochs (102) angeordnet ist, der am Anschlag (104) vorhanden ist, und die so ausgebildet ist, dass sie zwischen der Leitung (20) und dem Körper (10) abdichtet.

7. Getränkezapfhahn nach Anspruch 6, **dadurch gekennzeichnet, dass** das Ansatzstück (202) eine Rückseite (202e) aufweist, die dazu eingerichtet ist, mit dem Anschlag (104) zusammenzuwirken, und die eine Nut zur Aufnahme der Enddichtung der Leitung (20) aufweist.

8. Getränkezapfhahn nach Anspruch 6, **dadurch gekennzeichnet, dass** das Ansatzstück (202) eine Rückseite (202e) aufweist, die dazu eingerichtet ist, mit dem Anschlag (104) zusammenzuwirken, und dass die Enddichtung der Leitung (20) auf einem zylindrischen Teil des Ansatzstücks (202) in unmittelbarer Nähe der Rückseite (202e) angeordnet ist.

9. Getränkezapfhahn nach einem der vorhergehenden Ansprüche, **dadurch gekennzeichnet, dass**:

   - das Wellenloch (103) im Wesentlichen zylindrisch mit kreisförmigem Querschnitt ausgebildet ist;
   - eine Kappe (302), die eine Gleitverbindung mit der Welle (303) bildet und an ein vorderes Ende (303a) der Welle entlang einer Achse angeschraubt ist, die im Wesentlichen parallel zur Drehachse des zylindrischen Wellenlochs (103) mit kreisförmigem Querschnitt ist.

10. Getränkezapfhahn nach Anspruch 9, **dadurch gekennzeichnet, dass** der Steuermechanismus (30) einen Hebel (301) aufweist, der an der Kappe (302) oder an der Welle (303) befestigt ist, um die Drehung des Steuermechanismus zu erleichtern.

11. Getränkezapfhahn nach einem der vorhergehenden Ansprüche, **dadurch gekennzeichnet, dass** die Leitung (20) einen rohrförmigen Abschnitt (201) und ein Ansatzstück (202) aufweist, die zusammen einstückig ausgebildet sind, wobei das Ansatzstück einen Vorsprung der Leitung (20) bildet.

12. Getränkezapfhahn nach einem der vorhergehenden Ansprüche, **dadurch gekennzeichnet, dass** die Leitung (20) einen geraden Abschnitt aufweist, der durch eine Biegung verlängert ist.

13. Getränkezapfhahn nach Anspruch 1, **dadurch gekennzeichnet, dass**:

   - das Leitungsloch (102) und ein hinteres Ende (201b) des rohrförmigen Abschnitts (201) der Leitung (20) im Wesentlichen konisch sind;
   - das hintere Ende an seinem Umfang eine Dichtung zum Abdichten zwischen dem Körper (10) und der Leitung (20) hat.

14. Getränkezapfhahn nach einem der vorhergehenden Ansprüche, **dadurch gekennzeichnet, dass** der Körper (10) einen ausgesparten Abschnitt aufweist, der eine Tasche (105) bildet, die einen Abschnitt des Steuermechanismus (30) aufnimmt und eine Führung und einen Anschlag für die Drehung des Steuermechanismus bildet.

15. Getränkezapfhahn nach Anspruch 14 in Verbindung mit Anspruch 10, **dadurch gekennzeichnet, dass** der in der Tasche (105) untergebrachte Teil des Steuermechanismus (30) der Hebel (301) ist.

16. Getränkezapfhahn nach Anspruch 14 in Kombination mit Anspruch 9, **dadurch gekennzeichnet, dass** die Kappe (302) auf ihrer Rückseite einen Zapfen (302b) aufweist, der den Teil des Steuerungsmechanismus (30) bildet, der in der Tasche (105) aufgenommen ist.

17. Getränkezapfhahn nach einem der vorhergehenden Ansprüche, **dadurch gekennzeichnet, dass** der Verschluss (304) eine Verschlussdichtung (304b) aufweist, die gegen eine Rückseite (101b) des Körpers (10) gedrückt ist und die Dichtigkeit zwischen dem Inneren des Behälters (40) und dem Körper (10) gewährleistet.

18. Getränkezapfhahn nach einem der Ansprüche, **dadurch gekennzeichnet, dass** der Verschluss (304) eine Rippe (304c) aufweist.

**Claims**

1. Tasting tap able to be attached to a container (40) of a liquid that comprises:

   - a body (10), by which said tap is attached to said container, through which a pipe hole (102) and a shaft hole (103) pass, each having an axis of revolution;
   - a control mechanism (30) that comprises:

      ◦ a shaft (303) that is mounted to pivot in the shaft hole (103) of the body (10) in such a way as to pass through the body (10),
      ◦ a stopper (304) that is movable between a closed position when the stopper (304) totally closes the pipe hole (102) of the body (10) and an open position when said stopper does not at all close said pipe hole (102), the stopper (304) being connected to the shaft (303) so as to be flattened against a rear face (101b) of the body (10),
      ◦ a controller designed to cause the shaft (303) to pivot that is positioned in the area of a front face (101a) of the body (10);

   - a removable pipe (20) having dimensions that are slightly less than those of the pipe hole (102) of said body, able to be inserted into said pipe hole, and having a tubular part (201),

   **characterized in that** the pipe hole (102) comprises a reduction in diameter to form a stop (104) against which the pipe (20) abuts and **in that** the tasting tap comprises a locking/unlocking mechanism designed to occupy a locked state in which it immobilizes the pipe (20) in the pipe hole (102) and an unlocked state in which it allows the removal of the pipe (20).

2. Tasting tap according to Claim 1, **characterized in that** the locking/unlocking mechanism comprises a locking piece that is mobile in rotation against the front face (101a) of the body (10) around a pivoting axis that is perpendicular to the front face (101a) between an unlocked position in which the locking piece does not interfere with the pipe hole (102) and a locked position in which the locking piece interferes with the pipe hole (102) so as to immobilize the pipe (20) in the pipe hole (102).

3. Tasting tap according to Claim 1, **characterized in that** the locking/unlocking mechanism comprises a stationary locking piece positioned on the front face (101a) of the body (10) and that interferes with the pipe hole (102), and a pipe flat area (202b) provided on the pipe (20), the pipe flat area (202b) and the stationary locking piece being sized in such a way that when the pipe flat area (202b) is placed opposite the locking piece, the pipe (20) is not held in the pipe hole (102), and when the pipe flat area (202b) is offset in relation to the locking piece, the pipe (20) is held in the pipe hole (102).

4. Tasting tap according to Claim 2 or 3, **characterized in that** the locking piece is a cylindrical portion (302) of the control mechanism (30).

5. Tasting tap according to Claim 4, **characterized in that** the cylindrical portion (302) of the control mechanism comprises a chamfer (302a) designed to work with a pipe chamfer (202a) provided in the area of the pipe (20).

6. Tasting tap according to one of the preceding claims, **characterized in that** the pipe (20) has on a rear end (201b) an end fitting (202) and a pipe end seal (202c) positioned near a portion of the pipe hole (102) present in the area of the stop (104), designed to ensure the sealing between the pipe (20) and the body (10).

7. Tasting tap according to Claim 6, **characterized in that** the end fitting (202) comprises a rear face (202e) designed to work with the stop (104) and that comprises a groove to house the pipe end seal (202c).

8. Tasting tap according to Claim 6, **characterized in that** the end fitting (202) comprises a rear face (202e) designed to work with the stop (104) and **in that** the pipe end seal (202c) is positioned on a cylindrical part of the end fitting (202), in the immediate vicinity of the rear face (202e).

9. Tasting tap according to one of the preceding claims, **characterized in that**:

- the shaft hole (103) is approximately cylindrical with a circular section;
- a cap (302), forming a sliding connection with the shaft (303), is screwed to a front end (303a) of said shaft along an axis that is approximately parallel to the axis of revolution of the cylindrical shaft hole (103) with a circular section.

10. Tasting tap according to Claim 9, **characterized in that** the control mechanism (30) has a lever (301) attached to the cap (302) or to the shaft (303) to facilitate putting said control mechanism in rotation.

11. Tasting tap according to one of the preceding claims, **characterized in that** the pipe (20) comprises a tubular part (201) and an end fitting (202) that form only a single piece, said end fitting constituting a shoulder of the pipe (20).

12. Tasting tap according to one of the preceding claims, **characterized in that** the pipe (20) has a straight part that is extended by an elbow.

13. Tasting tap according to Claim 1, **characterized in that**:

- the pipe hole (102) and a rear end (201b) of the tubular part (201) of the pipe (20) are approximately conical;
- said rear end has a seal on its periphery to ensure the sealing between the body (10) and the pipe (20).

14. Tasting tap according to one of the preceding claims, **characterized in that** the body (10) comprises a recessed part constituting a pocket (105) accommodating a part of the control mechanism (30) and forming a guide and a stop for the rotation of said control mechanism.

15. Tasting tap according to Claim 14 combined with Claim 10, **characterized in that** the part of the control mechanism (30) accommodated in the pocket (105) is the lever (301).

16. Tasting tap according to Claim 14 combined with Claim 9, **characterized in that** the cap (302) has a stud (302b) on its rear face, which stud constitutes the part of the control mechanism (30) accommodated in the pocket (105).

17. Tasting tap according to any one of the preceding claims, **characterized in that** the stopper (304) has a stopper seal (304b) held by compression against a rear face (101b) of the body (10) and ensuring the sealing between the interior of the container (40) and the body (10).

18. Tasting tap according to any one of the claims, **characterized in that** the stopper (304) has a rim (304c).

FIG 1

FIG 2

FIG 3

FIG 4a

FIG 4b

FIG 5a

FIG 5b

FIG 5c

FIG 6a

FIG 6b

FIG 6c

FIG 7a

FIG 7b

FIG 7c

FIG 7d

FIG 8

FIG 10a

FIG 10b

**EP 3 448 800 B1**